Europäisches Patentamt

**European Patent Office**

Office européen des brevets

(11) Veröffentlichungsnummer: **0 115 767**
**A1**

(12) # EUROPÄISCHE PATENTANMELDUNG

(21) Anmeldenummer: **84100038.3**

(51) Int. Cl.³: **F 03 D 3/06**

(22) Anmeldetag: **03.01.84**

(30) Priorität: **04.01.83 DE 3300083**

(43) Veröffentlichungstag der Anmeldung: **15.08.84**
**Patentblatt 84/33**

(84) Benannte Vertragsstaaten: **AT BE CH FR GB IT LI LU NL SE**

(71) Anmelder: **Herter, Erich, Am Pelz, 66, D-6100 Darmstadt (DE)**
Anmelder: **Herter, Gunnar, Am Pelz, 66, D-6100 Darmstadt (DE)**

(72) Erfinder: **Herter, Erich, Am Pelz, 66, D-6100 Darmstadt (DE)**
Erfinder: **Herter, Gunnar, Am Pelz, 66, D-6100 Darmstadt (DE)**

(74) Vertreter: **Wolf, Günter, Dipl.Ing., Patentanwälte Dipl.-Ing. Amthor Dipl.-Ing. Wolf Postfach 70 02 45 An der Mainbrücke 16, D-6450 Hanau 7 (DE)**

(54) **Turbine zur Umsetzung von insbesondere Windenergie.**

(57) Die Turbine ist zur Umsetzung von insbesondere Windenergie in andere Energieformen bestimmt und besteht aus an einem Mast drehbar gelagerten Horizontalrotor, an dem vertikal mindestens ein Strömungsfangblatt angeordnet ist.

Das mindestens eine Strömungsfangblatt (1) ist aus zwei Flächen (2, 3) gebildet. Die eine der beiden Flächen (2, 3) ist in bezug auf die andere Fläche an mindestens einem Rotorarm (4) radial und/oder mindestens teilweise hintereinander versetzt angeordnet.

EP 0 115 767 A1

Turbine zur Umsetzung von insbesondere
Windenergie
==========================================

Die Erfindung betrifft eine Turbine zur Umsetzung von
insbesondere Windenergie gemäß Oberbegriff des Patentanspruches 1.

Turbinen der genannten Art sind bspw. bekannt nach der
DE-PS 518 733 und nach der FR-PS 921 518. An derartigen Turbinen können die Strömungsfangblätter über Gestänge vom Zentrum des Rotors aus während ihres Umlaufes
optimal auf die Windströmung eingestellt werden, wobei
jedoch die ganze Verstellmechanik relativ aufwendig und
auch gewichtsbelastend für den ganzen Rotor ist.

Ähnlich funktioniert auch eine Windturbine nach der
US-PS 1139 1o3, bei der die Verstellung mittels Doppelseilzügen erfolgt, von denen jeweils einer federbelastet ist und der andere längs einer entsprechend ausge-.
bildeten Kurvenführung geführt werden muß. Funktionsfähigkeit dieser Turbine überhaupt vorausgesetzt, verlangt auch diese einen beträchtlichen Bauaufwand,

um die Selbsteinstellung der Strömungsfangblätter zu
gewährleisten.

Bei der Konstruktion solcher Turbinen ist ferner folgendes zu berücksichtigen: Strömungsfangblätter mit
weniger schlanken, symmetrischem Tropfenquerschnitt
(der Schlankheitsgrad ist durch das Verhältnis der
beiden Hauptachsen des Querschnittes definert) sind
zwar selbst anlaufend (d.h. der ganze Rotor), haben
aber einen entsprechend großen    Widerstand, der
einer möglichst hohen Umlaufgeschwindigkeit entgegensteht. Sehr schlanke Fangblattprofile bieten demgegenüber zwar weniger Widerstand,und ein damit ausgerüsteter Rotor erreicht sehr hohe Umfangsgeschwindigkeiten, die über einem Mehrfachen der eigentlichen
Windgeschwindigkeit liegen können, aber solche Rotoren können nicht selbst anlaufen, so daß man zu geeigneten Maßnahmen und Zusatzeinrichtungen für solche
Rotoren greifen muß (Fremdantrieb).
Abgesehen davon stellt die Verwendung von einem Selbstanlauf gewährleistenden Profilen natürlich eine größere Gewichtsbelastung dar.

Der Erfindung liegt demgemäß die Aufgabe zugrunde,
eine Turbine der eingangs genannten Art dahingehend zu
verbessern, daß sie trotz Verwendung  wenig    Widerstand bietender, leichter und hohe Umlaufgeschwindigkeiten gewährleistender Strömungsfangblätter selbst anläuft
und ohne daß es dazu einer aufwendigen und gewichtsbelastenden Steuerung aus dem Zentrum des Rotors heraus bedarf.

Diese Aufgabe ist mit einer Turbine der eingangs
genannten Art nach der Erfindung durch das im Kennzeichen des Anspruches 1 Erfaßte gelöst. Vorteilhafte Weiterbildungen ergeben sich nach den Unteransprüchen.

Bei dieser erfindungsgemäßen Lösung liegt nur gewissermaßen ein dickes Strömungsprofil vor, das aber im
wesentlichen auf die beiden Wandflächen eines solchen
Profiles reduziert ist, d.h., das Strömungsfangblatt
besteht aus zwei versetzt angeordneten Flächen, die
in Umlaufrichtung bzw. in Bezug auf die Anströmung
einen gewissen Versatz zueinander haben, wobei im
Extremfall die beiden Flächen ebene Flächen sein können.

Überraschenderweise hat sich gezeigt, daß eine derart
ausgebildete Turbine offenbar aufgrund der oben erwähnten Profil- (im Sinne des Profilquerschnittes
gemeint) und damit Widerstandsreduzierung extrem hohe
Drehzahlen annimmt (in Abhängigkeit natürlich von der
jeweilig tatsächlichen Anströmgeschwindigkeit des
treibenden Mediums) und ohne weiteres selbst anläuft,

- 4 -                    0115767

obgleich im Grunde gar kein selbstanlaufendes Profil
(d.h. mit weniger schlankem Tropfenprofil) vorliegt.

Wie noch näher erläutert wird, lassen sich, ausgehend vom Grundprinzip, in Weiterbildung vorteilhafte
Ausführungsformen vorsehen, die zur Optimierung der
Energieumsetzung beitragen.

Die erfindungsgemäße Turbine wird nachfolgend anhand
der zeichnerischen Darstellung von Ausführungsbeispielen näher erläutert.

Es zeigt schematisch
Fig. 1 eine Draufsicht auf die Turbine;
Fig. 2 die Turbine in Seitenansicht;
Fig. 3 eine andere Ausführungsform der Turbine
Fig. 4 ein Strömungsfangblatt in Seitenansicht
Fig.   Draufsichten auf verschiedene Ausführungsformen
5 bis 1o  von Strömungsfangblättern und
Fig.11 eine besondere Ausführungsform des Rotors.

Vorab sei darauf hingewiesen, daß der Rotor der Turbine
mit einem Strömungsfangblatt (dann allerdings mit entsprechendem Gegengewicht), aber auch mit mehreren Strömungsfangblättern ausgestattet sein kann. Wie bekannt,
kann auch der Rotor insgesamt am Turbinenmast 8 auf
und ab verstellbar angeordnet sein.

·  0115767

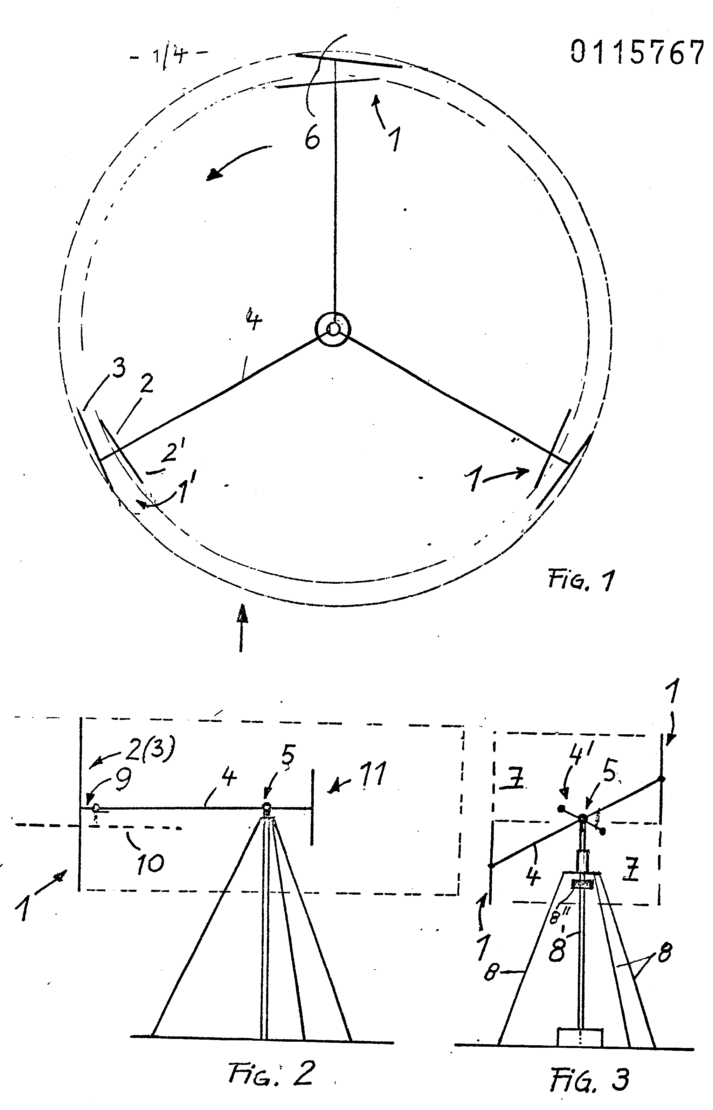

Das Grundprinzip der Turbinen- bzw. Strömungsfangblattausbildung ist aus Fig. 1 erkennbar, wobei im
vorliegenden Fall unter Strömungsfangblatt immer
zu verstehen ist, daß dieses aus zwei Flächen 2,3
besteht.

Die beiden Flächen 2,3 können bevorzugt, müssen aber
nicht an einem Rotorarm 4 gemeinsam befestigt sein,
wobei am Profil gemäß Fig. 1 der Rotor aus drei Rotorarmen 4, jeweils um $120^{\circ}$ versetzt, besteht, der
um die Rotorachse 5 dreht. Durch den erkennbaren
Versatz der Flächen ·2,3 zueinander, wirkt die Fläche
2 als Vorflügel 2' zur Fläche 3, wobei beide Flächen
einen Durchströmkanal 6 einschließen. Wie gestrichelt
in Fig. 1 mit 1' angedeutet, stellen die Flächen 2,3
praktisch die äußeren Begrenzungsflächen eines Tragflügelquerschnittes bzw. Profiles dar.

Die Flächen der Strömungsfangblätter 1 erstrecken
sich in Wirkstellung etwa senkrecht zur Zeichnungsebene, können aber ggf. diesbezüglich auch schwenkbar
sein, wie mit Pfeil 9 in Fig. 2 angedeutet, um bspw.
in Sturmsicherungsstellung 10 verschwenkt zu werden.
In Fig. 2 ist nur ein Strömungsfangblatt 1 vorgesehen
in Verbindung mit einem entsprechenden Gegengewicht 11, das bspw. auch aus zwei kleinen Flächen mit entsprechendem Gewicht bestehen kann.

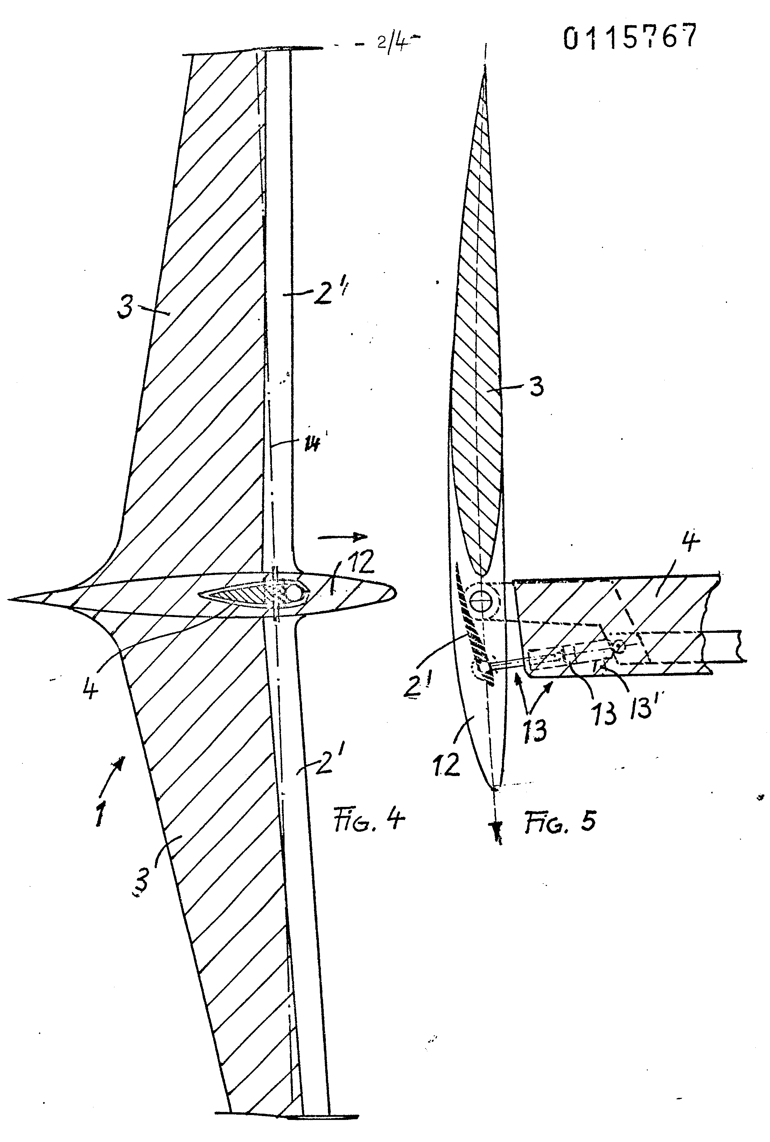

Bei Anordnung von zwei oder mehr Strömungsfangblättern 1 kann durch Einstellbarkeit der Rotorarme 4
dafür gesorgt werden, daß die Strömungsfangblätter 1
in Wirkstellung in jeweils separaten Umlaufräumen 7
rotieren (Fig. 3), um sich nicht gegenseitig zu stören, d.h., um sich nicht gegenseitig gewissermaßen
den "Wind aus den Segeln" zu nehmen.

In Fig. 4,5 ist ein Strömungsfangblatt 1 dargestellt,
wobei der Körper 12 praktisch keine Längserstreckung
senkrecht vor Zeichnungsebene hat, sondern diese haben nur die Flächen 2,3 bzw. der Vorflügel 2'.
Der Vorflügel 2' kann dabei mit geeigneten, im Bereich
des Körpers 12 und des Rotorarmes 4 angeordneten, unter der Zentrifugalkraft wirksamen Verstellelementen
13 verstellbar sein.

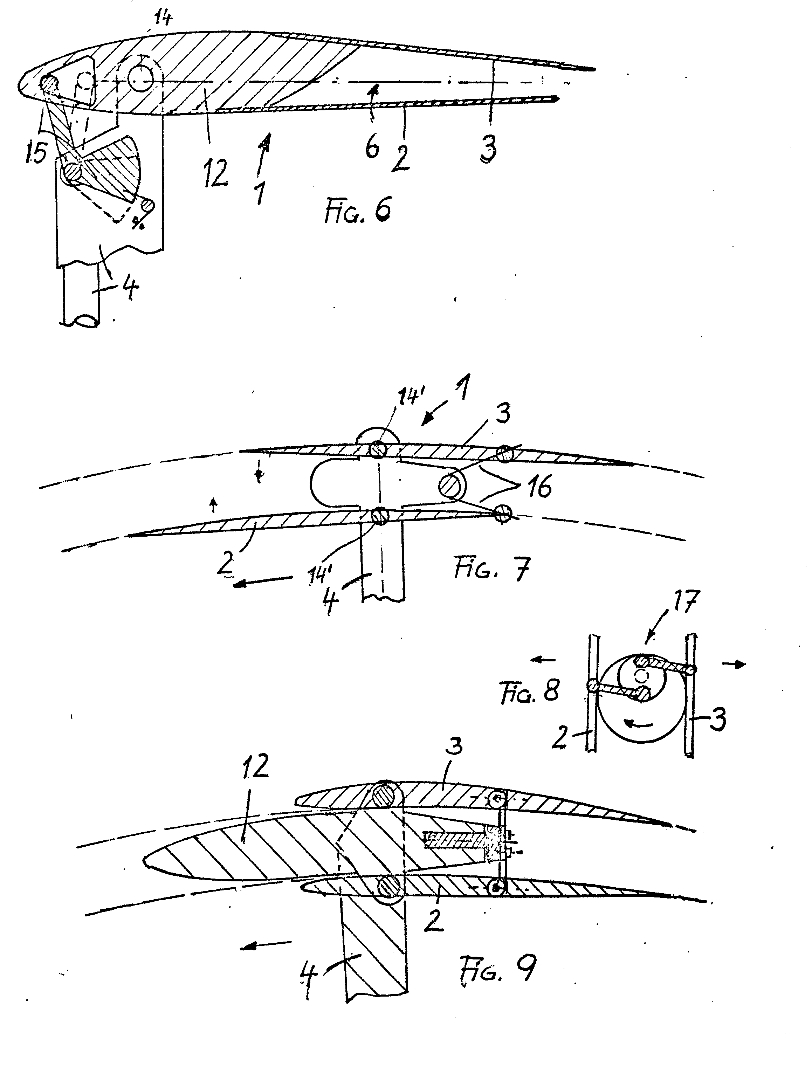

In Fig. 6 - 8 sind ebenfalls wieder die beiden versetzt angeordneten Flächen 2,3 erkennbar, die am Körper 12 sitzen, der seinerseits am Ende des Rotorarms 4
befestigt ist. Der Körper ist dabei gemäß Fig. 6 begrenzt schwenkbar um die Achse 14, wobei fliehkraftgeregelte Endbegrenzungselemente 15 dafür sorgen, daß das ganze Strömungsfangblatt 1 in optimaler Wirkstellung fixiert wird (schraffierte Stellung der
Endbegrenzungselemente 15).

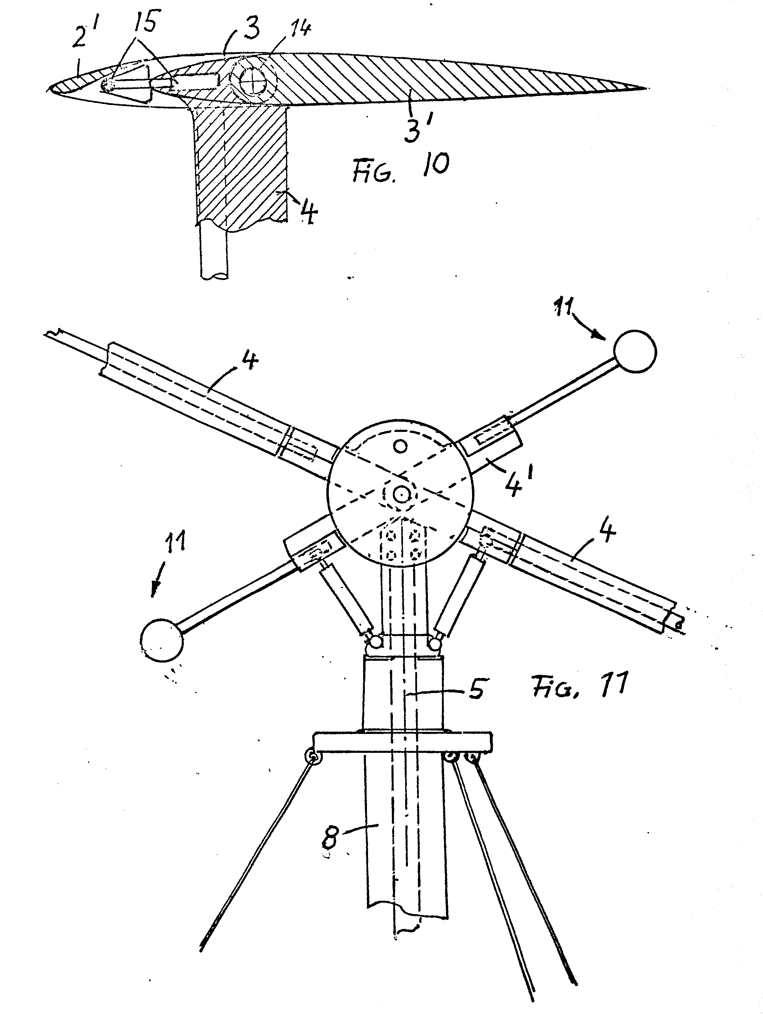

Bei der Ausführungsform nach Fig. 7 erfolgt diese Einstellung durch eine Blattfederanordnung 16, die für
den Rotoranlauf die beiden Flächen 2,3 hinten zunächst
spreizt und vorn in Pfeilrichtung zusammendrückt. Bei ausreichend hoher Drehzahl des Rotors wird die Fliehkraft an den
Flächen 2,3 wirksam(bei 2 vorn und bei 3 hinten größer),wodurch die beiden Flächen in die gezeigte Stellung bei Drehung
um die Achsen 14'gedrückt werden.
Die Ausführungsform nach Fig. 1o weicht, allerdings
unter Aufrechterhaltung des Grundprinzips in sofern
von dem Vorbeschriebenen ab, als hierbei die Fläche 3
zweigeteilt ist und deren hinteres Teil 3' zusammen
mit dem Vorflügel 2' begrenzt schwenkbar ist, wobei
das Vorderteil der Fläche 3 mit dem Rotorarm fest
verbunden ist.

Bezüglich der Verstellelemente 13 in Fig.5 für den Vorflügel 2'kann deren Verstellung dadurch bewirkt werden,
daß man den Zylinderinnenraum für den kleinen Verstellkolben 13'mit einer gegen die Anströmrichtung weisenden
Staudruckdüse 13" versieht.
Unter Bezug auf Fig.7 bis 9 kann die Verstellung der
beiden Flächen 2,3 auch durch einen Fliehkraftregler 17 gemäß Fig.8 erfolgen, wobei bzgl. Fig.9 darauf hinzuweisen
ist, daß die beiden Flächen 2,3 auch nur radial in Bezug auf
die Rotorachse 5 versetzt sein können. 12 ist dabei wieder
nur der Strömungskörper, der nur am Rotorarm sitzt, der die
Flächen 2,3 trägt und der praktisch keine Längserstreckung
senkrecht zur Zeichnungsebene hat.

Ergänzend zur Fig.1o ist zu bemerken, daß auch hierbei eine
Staudruckdüse(nicht dargestellt) die Endbegrenzungselemente
15 beaufschlagt. Sobald der Staudruck groß genug ist, befinddet sich die Kolbenstange mit ihrem Ende, wie dargestellt,
im Zwickel der dargestellten Dreiecksausnehmung, wodurch
der Vorflügel 2' und der in diesem Fall mit diesem eine
Verstelleinheit bildende hintere Teil 3' in optimaler Wirkstellung bei höchster Umlaufzahl.

Fig.11 ist eine besondere Ausführungsform des Rotors, die
im Zusammenhang mit Fig.3 zu sehen ist,d.h., dem Rotorarm 4
für die Flächen 2,3( an jedem Rotorarmende sitzt- nicht
dargestellt- ein Paar der Flächen 2,3) ist ein kurzer
Rotorarm 4'scherenartig schwenkbar zugeordnet für die
Anordnung von in Abhängigkeit der Drehzahl ausfahrbaren
Gegengewichten 11.

0115767

Zusammenfassend ist der Grundgedanke, nämlich Ersatz eines dicken, einen Selbstanlauf gewährleistenden Profiles durch zwei versetzt zueinander angeordnete dünne Profile bzw. Flächen 2,3 , die für sich allein keinen Selbstanlauf ermöglichten bzw. dies nur mit einer entsprechenden Ver - stellung aus dem Zentrum des Rotors heraus ermöglichten und die nur einen minimalen Widerstand bei hoher Drehzahl bieten, durch die beschriebenen Ausführungen der Turbine verwirklicht.

Nachzutragen ist noch bezüglich Fig. 3, daß der Rotor mit einer Schwungmasse 8" versehen und mehr oder weniger am Mast 8 gelagert ist und bspw. über eine Gelenkwelle 8' mit einem am Boden angeordneten Generator gekoppelt sein kann.

Patentansprüche:

1. Turbine zur Umsetzung von insbesondere Windenergie in andere Energieformen, bestehend aus an einem Mast drehbar gelagertem Horizontalrotor, an dem vertikal mindestens ein Strömungsfangblatt angeordnet ist, d a d u r c h g e k e n n z e i c h n e t, daß das mindestens eine Strömungsfangblatt (1) aus zwei Flächen (2,3) gebildet und daß die eine der beiden Flächen am mindestens einen Rotorarm(4) in Bezug auf die andere Fläche radial und/oder mindestens teilweise hintereinander versetzt angeordnet ist.

2. Turbine nach Anspruch 1, d a d u r c h g e k e n n z e i c h n e t, daß die als Vorflügel (2') wirkende Fläche (2) zur Rotorachse (5) eine kleinere radiale Distanz als die andere Fläche (3) hat.

3. Turbine nach Anspruch 1 und/oder 2, d a d u r c h g e k e n n z e i c h n e t, daß mindestens eine der beiden Flächen (2,3) am Rotorarm (4) in Bezug auf ihre Längsachse verstellbar angeordnet ist.

0115767

4. Turbine nach Anspruch 1 bis 3, d a d u r c h
   g e k e n n z e i c h n e t, daß der Vorflügel (2') mit seiner Fläche (2) und die andere
   Fläche (3) einen Durchströmkanal (6) einschließen.

5. Turbine nach Anspruch 3 und/oder 4,
   d a d u r c h  g e k e n n z e i c h n e t, daß
   die mindestens eine verstellbare Fläche (2,3)
   mit Verstellbegrenzungselementen versehen ist.

6. Turbine nach einem der Ansprüche 1 bis 5,
   d a d u r c h  g e k e n n z e i c h n e t, daß
   bei Anordnung von mindestens zwei Strömungsfangblättern (1) am Rotor (4') jedes Blatt derart
   am Rotor angeordnet ist, daß es einen eigenen,
   vom jeweils anderen Strömungsfangblatt ungestörten Raum durchläuft.

7. Turbine nach Anspruch 6, d a d u r c h
   g e k e n n z e i c h n e t, daß der Rotorarm (4)
   in Bezug auf seine Rotorachse (5) einstellbar
   angeordnet ist.

8. Turbine nach einem der Ansprüche 1 bis 7, d a d u r c h   g e k e n n z e i c h n e t, daß das aus den zwei Flächen (2,3) gebildete Strömungsfangblatt (1) bezüglich seiner Längserstrekkung schwenkbar am Ende des Rotorarmes (4) angeordnet ist.

9. Turbine nach Anspruch 1, insbesondere für Wasserströmung, d a d u r c h   g e k e n n z e i c h n e t, daß der Vorflügel (2') und das abströmseitige Teil (3') der anderen Fläche (3) gemeinsam in Bezug auf das anströmseitige Teil der anderen Fläche (3) am Rotorarm (4) angeordnet ist.

0115767

Fig. 1

Fig. 2

Fig. 3

Fig. 4

Fig. 5

0115767

Fig. 6

Fig. 7

Fig. 8

Fig. 9

0115767

Fig. 10

Fig. 11

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | WO-A-8 000 733 (WIENER BRÜCKENBAU- UND EISENKONSTRUKTIONS AG) * Seite 3, Zeile 14 - Seite 5, Zeile 8 * | 1,2,4 | F 03 D 3/06 |
| A | DE-A-3 026 315 (HERTER) * Seite 11, Zeile 7 - Ende * | 5 | |
| A | DE-A-3 018 211 (EISENWERKE KAISERSLAUTERN) * Seite 6, Zeilen 1-23 * | 3 | |
| A | DE-A-3 107 394 (HERTER) * Seite 12, Zeile 21 - Seite 15, Zeile 1 * | 3,7 | |
| A | US-A-4 329 116 (LJUNGSTRÖM) * Zusammenfassung * | 1 | RECHERCHIERTE SACHGEBIETE (Int. Cl. 3) F 03 D |

Der vorliegende Recherchenbericht wurde für alle Patentansprüche erstellt.

| Recherchenort DEN HAAG | Abschlußdatum der Recherche 19-04-1984 | Prüfer DE WINTER P.E.F. |
|---|---|---|